# EUROPÄISCHE PATENTSCHRIFT

(11) **EP 2 153 287 B1**
(45) Veröffentlichungstag und Bekanntmachung des Hinweises auf die Patenterteilung: **18.07.2012**
(21) Anmeldenummer: 08758759.8
(22) Anmeldetag: 26.05.2008
(51) Int. Cl.: G05B 19/042

(54) **WERKZEUGERKENNUNG MIT PROFINET**
TOOL IDENTIFICATION USING PROFINET
RECONNAISSANCE D'OUTIL AU MOYEN DE PROFINET

(30) Priorität: 01.06.2007 DE 102007025892
(43) Veröffentlichungstag der Anmeldung: 17.02.2010
(73) Patentinhaber: Phoenix Contact GmbH & Co. KG, 32825 Blomberg (DE)
(72) Erfinder: LESSMANN, Gunnar, 33039 Nieheim (DE)
(74) Vertreter: Bill, Burkart Hartmut
(86) Internationale Anmeldenummer: PCT/EP2008/004171
(87) Internationale Veröffentlichungsnummer: WO 2008/145326

(56) Entgegenhaltungen:
- DE-A1-102004 017 529
- DE-A1-102005 004 265
- US-A1- 2005 256 939
- US-A1- 2006 190 112
- US-B1- 6 449 715

## Beschreibung

Die Erfindung betrifft ein Verfahren zum Inbetriebnehmen einer Automatisierungsstation an der Automatisierungsvorrichtung einer Industrieanwendung.

Bei heutigen Industrieanwendungen, wie z.B. in der Automobilfertigung oder im Maschinenbau müssen häufig an einer Vorrichtung im Betrieb unterschiedliche Werkzeuge mit für die Werkzeugfunktionalitäten notwendigen Feldgeräten, wie z.B. Sensoren oder Aktoren, betrieben werden können.

Für die Anbindung bzw. Einbindung von Feldgeräten bei Automatisierungssystemen in Industrieanwendungen wird hierzu heutzutage meist auf Profinet zurückgegriffen, welches bekanntermaßen der offene Ethernet-basierte Automatisierungsstandard der Profibus-Nutzerorganisation (PNO) ist und im Wesentlichen zu 100 % dem Ethernet-Standard (nach IEEE 802.3) folgt. Hierbei stehen Prozess- und Fertigungsdaten nicht nur auf der Feldebene zur Verfügung, sondern können nahtlos in bereichsübergreifende Datenerfassungssysteme eingehen, so dass eine Integration dezentraler Peripherie auch in vertikaler Richtung ermöglicht wird.

Ein wesentlicher Unterschied zwischen Profibus und Profinet Anwendungen besteht in der unterschiedlichen Adressierung der Geräte der in einem jeweiligen Netzwerk einzubindenden bzw. eingebundenen Feldgeräte.

Im Gegensatz zum Profibus erfolgt die Adressierung der jeweils eingebundenen Feldgeräte innerhalb eines Profinet Netzes mittels der jedem Gerät eigenen und eindeutigen MAC-Adresse sowie einer dieser physikalischen Adresse eindeutig zugeordneten logischen IP-Adresse.

Vor der Zuordnung der physikalischen und logischen Netzwerk-Adressen muss jedoch jedem Profinet Netzwerkteilnehmer ein symbolischer Name bzw. Profinet-Gerätenamen zur Identifizierung im Netz zur anschließenden eindeutigen Adressierung vergeben werden. Dieser symbolische Name bzw. Profinet-Gerätename wird auf dem Feldgerät eingestellt, bevor dieser in einem Profinet System betrieben werden kann. Diese Vergabe wird häufig auch als "Taufe" bezeichnet.

Diese Gerätenamen werden überdies einer Konfigurationseinrichtung, welche der Vorrichtung zuordenbar ist, an welche die Feldgeräte angebunden werden sollen, im Vorfeld bekannt gemacht und einer Sollkonfiguration zugewiesen. Diese Informationen aus der Konfigurationseinrichtung werden anschließend an eine der Vorrichtung zugeordnete Steuerung zur Vergabe der IP-Adressen sowie zur Parametrierung und Konfiguration von angeschalteten, identifizierten Feldgeräte übergegeben. Wird ein Feldgerät ausgetauscht, muss an dem "neuen", das auszutauschende Feldgerät ersetzenden Feldgerät zunächst wieder der ursprüngliche Profinet-Gerätename, d.h. der gleiche wie beim "alten" auszutauschenden Feldgerät, eingestellt werden.

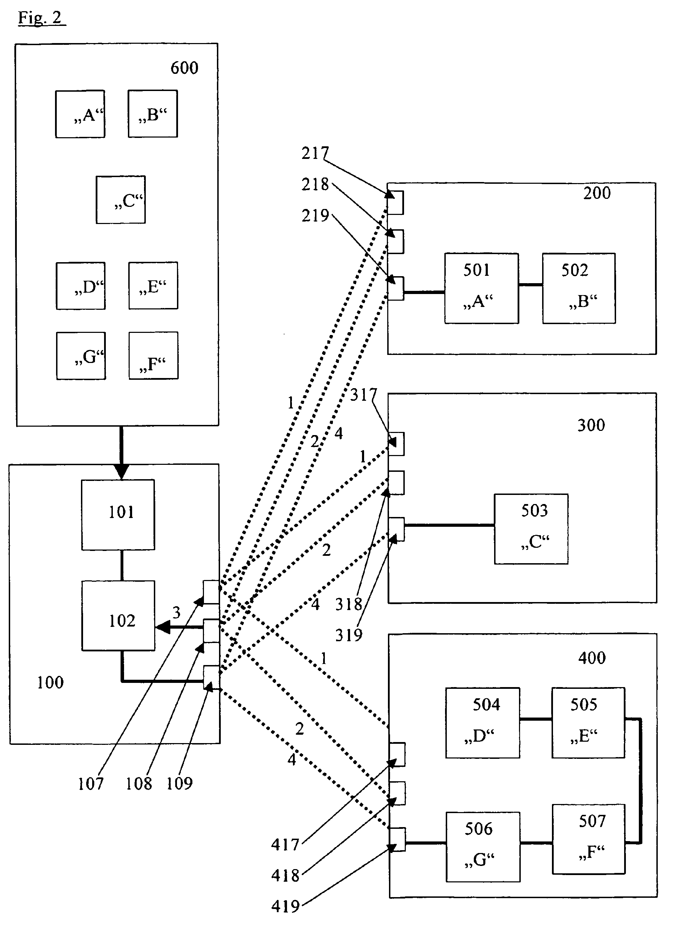

Basierend auf dem Profinet-Standard erfolgt bei heutigen Industrieanwendungen das Inbetriebnehmen von unterschiedlichen Automatisierungsstationen, wie z.B. Werkzeuge, zusammen mit integrierten, für die Umsetzung von Automatisierungsfunktionalitäten erforderlichen Feldgeräten an einer Automatisierungsvorrichtung, wie z.B. einem Roboter oder einer Fertigungsmaschine, nach dem bekannten Stand der Technik unter Bezugnahme auf die Fig. 2, welche eine stark vereinfachte Prinzipskizze von an einer Automatisierungsvorrichtung zu betreibenden Automatisierungsstationen nach dem Stand der Technik darstellt, im Wesentlichen wie nachfolgend beschrieben.

Bei Fig. 2 ist eine beispielhafte, nach dem Profinet Standard arbeitende Automatisierungsvorrichtung 100 gezeigt, der eine Konfigurationseinrichtung 600 zugeordnet ist. An die Automatisierungsvorrichtung 100 sollen drei Werkzeuge 200, 300 und 400 als Automatisierungsstationen im Betrieb angebunden werden.

Zunächst koppeln an die Vorrichtung 100 im Betrieb die Werkzeuge 200, 300, und 400 an. Beim Ankoppelvorgang der Werkzeuge 200, 300 und 400 werden diese zunächst über bei der Automatisierungsvorrichtung 100 angeordnete Einspeisungseinrichtungen 108 und an den Werkzeugen angeordnete Einspeisungseinrichtungen 217, 317 und 417 in einem ersten Schritt mit Spannung versorgt 1. Daraufhin erkennt eine Steuerung 101 das angeschlossene Werkzeug über spezielle Eingangsinformationen, die abhängig vom Werkzeug eine spezielle Codierung aufweisen. Die Erkennung des angeschlossenen Werkzeugs kann über Steckverbinder aber auch berührungslos z.B. über RFID-Techniken erfolgen. In jedem Fall muss hierzu Werkzeugseitig jeweils eine spezielle Codierungseinrichtung, bei Fig. 2 mit 218, 318 bzw. 418 gekennzeichnet, vorgesehen sein, und auf der Seite der Automatisierungsvorrichtung 100 eine Schnittstelleneinrichtung 108, an welche die Codierungsinformation in einem nachfolgenden Schritt 2 übergeben wird. Ferner umfasst die Automatisierungsvorrichtung 100 ein mit der Steuerung 101 verbundenes Feldgerät 102, welches die übergebene Codierungsinformation ausliest 3 und der Steuerung übergibt.

Ferner sind auf den Werkzeugen 200, 300 und 400 jeweils eine Anzahl von Profinet-kompatiblen Feldgeräten 501 und 502, 503 bzw. 504 bis 507 installiert, wobei je nach Werkzeug unterschiedliche Anzahl und Typen möglich und üblicherweise auch erforderlich sind. Auch die Feldgeräte 501 und 502, 503 und 504 bis 507 werden über die Versorgungsspannung der Werkzeuge 200, 300 bzw. 400 mit Spannung versorgt, welches aus Übersichtlichkeitsgründen bei Fig. 2 nicht weiter dargestellt ist. Daraufhin werden über einen an der Automatisierungsvorrichtung 100 angeordneten Kommunikationsanschlüss 109 sowie an den Werkzeugen 200, 300 und 400 angeordnete und mit den Feldgeräten verbundene Kommunikationsanschlüsse 219, 319 bzw. 419 eine Verbindung 4 zu diesen Feldgeräten hergestellt.Jedes Feldgerät ist, wie vorstehend beschrieben, durch seinem Gerätenamen eindeutig gekennzeichnet. Die Feldgeräte 501 bis 507 aller Werkzeuge müssen dabei somit einen eindeutigen Gerätenamen, im Vorliegenden Beispiel mit "A", "B", "C", "D", "E", F" bzw. "G" gekennzeichnet, besitzen, der auf den Geraten dauerhaft gespeichert ist.

Diese Gerätenamen "A", "B", "C", "D", "E", F" bzw. "G" sind auch zuvor in der Konfigurationseinrichtung 600 projektiert und gespeichert worden und werden von der Konfigurationseinrichtung 600 der Steuerung 101 zur Inbetriebnahme bekannt gemacht.

Nach Identifizierung der einzelnen Feldgeräte 501 bis 507 durch die Steuerung, 101 führt diese in Abhängigkeit vom jeweils angeschlossenen Werkzeug anschließend die notwendigen Automatisierungsaufgaben zur Inbetriebnahme durch. Dazu verwendet sie die Informationen über das angeschlossene Werkzeug und über die auf den Werkzeugen installierten Feldgeräte. Dokument US 2005/256939 A1 beschreibt ein Profinet Netzwerk, das ein Barcode-Lesegerät benutzt um Profinet-Geräte zu identifizieren.

Wesentliche Nachteile des vorbeschriebenen Standes der Technik sind in der notwendigen Werkzeugcodierung begründet.

Die Werkzeugcodierung zur Identifizierung bzw. Erkennung der Werkzeuge hat typischer Weise hohe Kosten zu Folge, da zum Einen auf der Seite der Automatisierungsvorrichtung 100 eigene Schnittstellen 108 und ein zusätzliches spezielles Feldgerät 102 zur Codierungsauswertung notwendig sind. Des Weiteren können die jeweiligen Codierungseinrichtungen im laufenden Betrieb verschmutzen oder zerstört werden, was ggf. Ausfälle nach sich zieht.

Eine Aufgabe der Erfindung ist folglich darin zu sehen, ein Verfahren zu entwickeln, mit welchem an einer Automatisierungsvorrichtung im Betrieb unterschiedliche Automatisierungsstationen betrieben werden können, ohne dass eine Werkzeugcodierung notwendig ist, und das somit ohne die damit verbundenen kostenintensiven Einrichtung zur Codierungsauswertung funktioniert.

Die erfindungsgemäße Lösung der Aufgabe ist durch ein Verfahren mit den Merkmalen nach Anspruch 1 gegeben.

Vorteilhafte und/oder bevorzugte Ausführungsformen sind Gegenstand der Unteransprüche.

Die Erfindung schlägt folglich ein Verfahren zum Inbetriebnehmen einer Automatisierungsstation an der Automatisierungsvorrichtung einer Industrieanwendung vor, bei welchem die Automatisierungsstation eine Anzahl von Profinet-kompatiblen Geräten umfasst, denen zur Identifizierung jeweils ein eindeutiger symbolischer Name im Vorfeld vorgegeben wird, wobei eine Identifizierung der zum Betreiben an die Automatisierungsvorrichtung angeschalteten Automatisierungsstation anhand der symbolischen Namen der Profinet-kompatiblen Geräte durchgeführt wird und die Ansteuerung der Profinet-kompatiblen Geräte durch die Automatisierungsvorrichtung nach Anschalten der Automatisierungsstation in funktioneller Abhängigkeit der identifizierten Automatisierungsstation erfolgt.

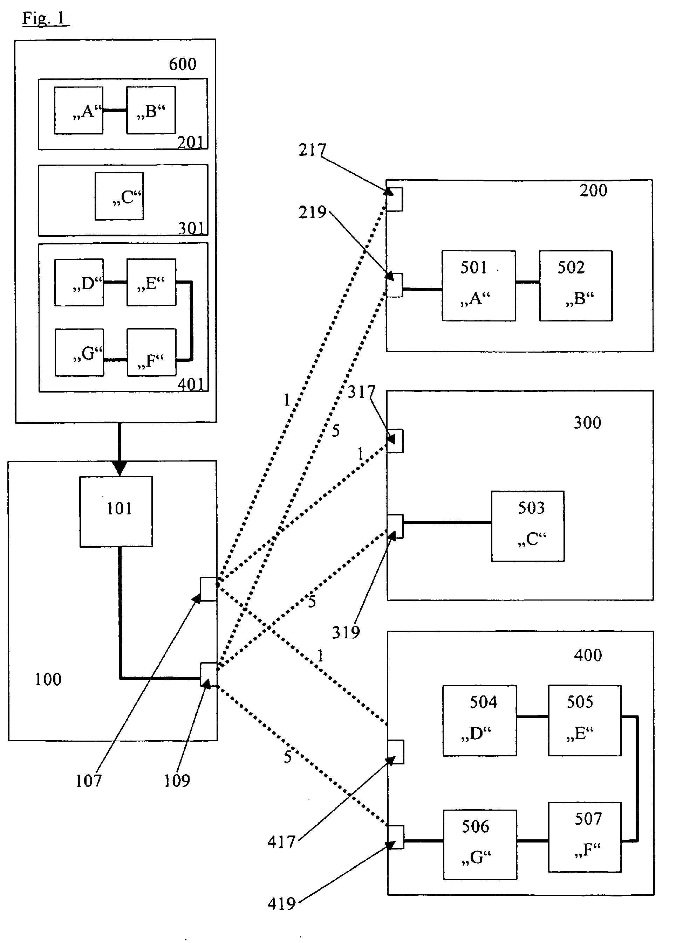

Die Erfindung wird nachfolgend anhand eines Ausführungsbeispiels unter Bezugnahme auf die Fig. 1 beschrieben.

In den Zeichnungen zeigen:
- Fig. 1: eine stark vereinfachte Prinzipskizze von an einer Automatisierungsvorrichtung zu betreibenden Automatisierungsstationen nach der Erfindung, und
- Fig. 2: eine stark vereinfachte Prinzipskizze von an einer Automatisierungsvorrichtung zu betreibenden Automatisierungsstationen nach dem Stand der Technik.

Nachfolgend wird auf Fig. 1 Bezug, welche eine stark vereinfachte Prinzipskizze eines Ausführungsbeispiels nach der Erfindung von an einer Automatisierungsvorrichtung zu betreibenden Automatisierungsstationen zeigt.

Ähnlich zur Fig. 2 ist auch bei Fig. 1 eine beispielhafte Automatisierungsvorrichtung 100 gezeigt, welche angepasst ist, nach dem Profinet Standard zu arbeiten und der eine Konfigurationseinrichtung 600 zugeordnet ist. An die Automatisierungsvorrichtung 100 sollen drei Werkzeuge 200, 300 und 400 als Automatisierungsstationen im Betrieb angebunden werden, wobei wiederum auf den Werkzeugen 200, 300 und 400 jeweils eine Anzahl von Profinet-kompatiblen Feldgeräten 501 und 502, 503 bzw. 504 bis 507 installiert sind, die je nach Werkzeug in Anzahl und Typ unterschiedlich sein können und üblicherweise auch erforderlich sind.

Zunächst koppeln, im Wesentlichen wie nach dem beschriebenen Stand der Technik, die Werkzeuge 200, *300,* und 400 an die Vorrichtung 100 an. Beim physikalischen Ankoppelvorgang der Werkzeuge 200, 300 und 400 werden diese über eine bei der Automatisierungsvorrichtung 100 angeordnete Einspeisungseinrichtung 108 und über an den Werkzeugen angeordnete Einspeisungseinrichtungen 217, 317 und 417 in einem ersten Schritt mit Spannung versorgt 1.

Auch die Feldgeräte 501 und 502, 503 und 504 bis 507 werden über die Versorgungsspannung der Werkzeuge 200, 300 bzw. 400 mit Spannung versorgt, welches aus Übersichtlichkeitsgründen bei Fig. 1 nicht weiter dargestellt ist.

In Abwandlung zum beschriebenen Stand der Technik nach Fig. 2 erfolgt gemäß der Erfindung jedoch keine Werkzeugerkennung anhand einer speziellen Werkzeugcodierung.

Vielmehr werden nach dem Ankoppeln über den an der Automatisierungsvorrichtung 100 angeordneten Kommunikationsanschlüss 109 sowie über die an den Werkzeugen 200, 300 und 400 angeordneten und mit den Feldgeräten verbundene Kommunikationsanschlüsse 219, 319 bzw. 419 lediglich Kommunikationsverbindungen 5 zu diesen Feldgeräten hergestellt, über welche die eindeutigen symbolischen Namen bzw. Profinet-Gerätenamen "A", "B", "C", "D", "E", F" und "G" der Feldgeräte 501, 502, 503, 504, 505, 506 bzw. 507 der Steuerung 101 der Automatisierungsvorrichtung 100 übergeben werden.

In besonders bevorzugter Ausführung lösen die Feldgeräte hierbei selbständig nach dem Ankoppeln einer jeweiligen Automatisierungsstation an der Automatisierungsvorrichtung eine Anmeldungsprozedur aus. Die Feldgeräte 501 bis 507 der Automatisierungsstationen 200, 300 und 400 melden sich z.B. über die Kommunikationsverbindungen 5 selbständig bei der Steuerung 101 an und übertragen jeweils Ihren Profinet-Geratenamen "A",... bzw. "G".

Diese Gerätenamen "A", "B", "C", "D", "E", F" bzw. "G" werden wiederum zuvor in der Konfigurationseinrichtung 600 projektiert und gespeichert. Zu jedem Gerätenamen wird ferner zumindest eine logische Zuordnungsvorschrift 201, 301 bzw. 401 zu einer Automatisierungsstation gespeichert. Z.B. ist die in der Konfigurationseinrichtung 600 zu den Gerätenamen "A" und "B" projektierte und gespeicherte Zuordnungsvorschrift 201 eindeutig mit der Automatisierungsstation bzw. dem Werkzeug 200 logisch verknüpft.

Zur Identifizierung der Feldgeräte 200, 300 und 400 werden die Gerätenamen und die hierzu jeweils zugeordnet gespeicherten Informationen von der Konfigurationseinrichtung 600 der Steuerung 101 zur Inbetriebnahme bekannt gemacht. Unter Nutzung dieser in der Konfigurationseinrichtung vorab gespeicherten Daten kann somit ein von der angekoppelten angekoppelten Automatisierungsstation umfasstes Feldgerät durch die Automatisierungsvorrichtung anhand des Profinet-Gerätenamens identifiziert werden. Ferner kann parallel auch die Automatisierungsstation selbst anhand der zu dem Gerätenamen gespeicherten Zuordnungsvorschrift identifiziert werden.

Wird gemäß besonders zweckmäßiger Weiterbildung zu jedem Gerätenamen ferner zumindest eine logische Zuordnungsvorschrift 201, 301 bzw. 401 zu einer Automatisierungsstation gespeichert, die zusätzlich eine Zuordnung zu ausgewählten weiteren von dieser Automatisierungsstation umfassten Feldgeräten vorgibt, kann nach Übergabe dieser Informationen von der Konfigurationseinrichtung 600 an die Steuerung 101 durch die Identifizierung eines Gerätes gleichzeitig eine Identifizierung dieser ausgewählten weiteren von dieser Automatisierungsstation umfassten Feldgeräte durchgeführt werden.

Ist z.B. die in der Konfigurationseinrichtung 600 zu den Gerätenamen "A" und "B" projektierte und gespeicherte Zuordnungsvorschrift 201 eindeutig mit der Automatisierungsstation bzw. dem Werkzeug 200 logisch verknüpft und gibt zusätzlich vor, dass auch noch das Feldgerät "B" zu einer gemeinsamen Gruppe einer selben Automatisierungsstation wie das Feldgerät "A" gehört, ordnet die Steuerung 101 die identifizierten Gerätenamen den projektierten Gruppen zu, wobei zur Identifikation einer Gruppe das Vorhandensein eines identifizierten Gerätenamens ausreicht.

Der Betrieb des Werkzeuges bzw. der Automatisierungsstationen 200, 300 oder 400 erfolgt jedoch praktischer Weise erst, nachdem sich aber alle Feldgeräte einer gemeinsamen Gruppe gemeldet haben. Die Inbetriebnahme der Automatisierungsstation 200, 300 und 400 wird somit zweckmäßig erst nach Durchlaufen einer Anmeldeprozedur von allen von der Automatisierungsstation umfassten Feldgeräten vervollständigt.

Nach Identifizierung der einzelnen Feldgeräte 501 bis 507 durch die Steuerung 101, führt diese anschließend in Abhängigkeit von der jeweils angeschlossenen, erfindungsgemäß erkannten Automatisierungsstation die notwendigen Automatisierungsaufgaben zur Inbetriebnahme durch.

Ein wesentlicher Vorteil der Erfindung liegt somit darin, dass zur Erkennung einer Automatisierungsstation, wie z.B. eines Werkzeuge, lediglich Informationen zu den auf der Automatisierungsstation installierten Profinet-kompatiblen Feldgeräten verwendet werden. Die Steuerung einer Automatisierungsvorrichtung, an welche die Automatisierungsstation angebunden wird, bekommt durch eine der Automatisierungsvorrichtung zuordenbare Konfigurationseinrichtung mit den Informationen zu den Feldgeräten gleichzeitig Informationen über die Automatisierungsstation, die ankoppelt, z.B. auch während des Betriebs der Automatisierungsvorrichtung an diese ankoppelt, projektiert. Diese Projektierung umfasst eine Zuordnung zwischen Feldgeräten und jeweiligen Automatisierungsstationen oder auch einzelnen Gruppen und bevorzugt auch die an einer Automatisierungsstationen oder in einer Gruppe enthaltenen weiteren Feldgerate, wobei die Gerate durch ihren Profinet-Gerätenamen identifiziert sind. Diese Zuordnung ermöglicht die Identifikation einer angeschlossenen Automatisierungsstation ohne eine spezielle Codierung der Automatisierungsstation und ohne die hierfür bisher notwendigen speziellen Identifikationsmechanismen bzw. -einrichtungen.

## Patentansprüche

1. Verfahren zum Inbetriebnehmen einer Automatisierungsstation (200, 300, 400) an der Automatisierungsvorrichtung (100) einer Industrieanwendung, bei welchem die Automatisierungsstation eine Anzahl von Profinet-kompatiblen Geräten (501, ..., 507) umfasst, denen zur Identifizierung jeweils ein eindeutiger symbolischer Name im Vorfeld vorgegeben wird, **dadurch gekennzeichnet, dass** eine Identifizierung der zum Betreiben an die Automatisierungsvorrichtung angeschalteten Automatisierungsstation anhand der symbolischen Namen der Profinet-kompatiblen Geräte durchgeführt wird und die Ansteuerung der Profinet-kompatiblen Geräte durch die Automatisierungsvorrichtung nach Anschalten der Automatisierungsstation in funktioneller Abhängigkeit der identifizierten Automatisierungsstation erfolgt.

2. Verfahren nach Anspruch 1, wobei
vor Inbetriebnahme der Automatisierungsstation in einer der Automatisierungsvorrichtung zuordenbaren Konfigurationseinrichtung (600) jeder symbolische Namen und zu jedem symbolischen Namen eine logische Zuordnungsvorschrift zu einer Automatisierungsstation gespeichert wird,
die Automatisierungsstation zur Inbetriebnahme an die Automatisierungsvorrichtung physikalisch angekoppelt wird,
unter Nutzung der in der Konfigurationseinrichtung gespeicherten Daten ein von der angekoppelten Automatisierungsstation umfasstes Gerät durch die Automatisierungsvorrichtung anhand des symbolischen Gerätenamens identifiziert wird,
und die Automatisierungsstation anhand der zu dem symbolischen Namen gespeicherten Zuordnungsvorschrift identifiziert wird.

3. Verfahren nach Anspruch 2, wobei vor Inbetriebnahme der
Automatisierungsstation in der der Automatisierungsvorrichtung zuordenbaren Konfigurationseinrichtung zu jedem symbolischen Namen eine logische Zuordnungsvorschrift zu der Automatisierungsstation und zu einer Gruppe von ausgewählten weiteren von dieser Automatisierungsstation umfassten Geräten gespeichert wird, wobei durch die Identifizierung eines Gerätes gleichzeitig eine Identifizierung der Gruppe von ausgewählten weiteren von dieser Automatisierungsstation umfassten Geräten durchgeführt wird.

4. Verfahren nach einem der vorstehenden Ansprüche, **dadurch gekennzeichnet, dass** die Geräte selbständig nach dem Ankoppeln der Automatisierungsstation an der Automatisierungsvorrichtung eine Anmeldungsprozedur auslösen und die Inbetriebnahme der Automatisierungsstation erst nach Durchlaufen einer solchen Anmeldeprozedur von allen von der Automatisierungsstation umfassten Geräte vervollständig wird.

## Claims

1. Method of activating an automation station (200, 300, 400) on the automation apparatus (100) of an industrial application, in which the automation station comprises a plurality of Profinet-compatible devices (501, ... , 507), each being provided in advance with a distinct symbolic name for identification purposes, **characterised in that** an identification of the automation station connected to the automation apparatus for operation is carried out using the symbolic names of the Profinet-compatible devices and the Profinet-compatible devices are actuated by the automation apparatus after connection of the automation station in functional dependency of the identified automation station.

2. Method as claimed in claim 1, wherein
before activation of the automation station, each symbolic name and, for each symbolic name, a logical assignment specification to an automation station is stored in a configuration unit (600) which can be assigned to the automation apparatus,
for activation purposes, the automation station is physically coupled to the automation apparatus,
using the data stored in the configuration unit, a device comprised by the coupled automation station is identified by the automation apparatus using the symbolic device name;
and the automation station is identified using the assignment specification stored for the symbolic name.

3. Method as claimed in claim 2, wherein, before activation of the automation station, a logical assignment specification to the automation station and to a group of selected additional devices comprised by this automation station is stored in the configuration unit, which can be assigned to the automation apparatus, for each symbolic name, wherein by identification of a device, simultaneously an identification of the group of selected additional devices comprised by this automation station is carried out.

4. Method as claimed in any one of the preceding claims, **characterised in that** the devices autonomously initiate a reporting procedure after the automation station is coupled to the automation apparatus, and the activation of the automation station is completed only after all the devices comprised by the automation station have gone through such a reporting procedure.

## Revendications

1. Procédé pour mettre en service une station d'automatisation (200, 300, 400) sur le dispositif d'automatisation (100) d'une application industrielle, dans lequel la station d'automatisation comprend un certain nombre d'appareils (501, ..., 507) compatibles avec Profinet, appareils pour chacun desquels un nom symbolique clair est prédéfini dans la zone préalable pour l'identification, **caractérisé en ce qu'**une identification de la station d'automatisation rattachée pour l'exploitation au dispositif d'automatisation est effectuée à l'aide des noms symboliques des appareils compatibles avec Profinet et l'actionnement des appareils compatibles avec Profinet s'effectue par le dispositif d'automatisation après le rattachement de la station d'automatisation dans la dépendance fonctionnelle de la station d'automatisation identifiée.

2. Procédé selon la revendication 1, dans lequel :
chaque nom symbolique et, pour chaque nom symbolique, une prescription d'attribution logique à une station d'automatisation sont mémorisés avant la mise en service de la station d'automatisation dans un dispositif de configuration (600) pouvant être attribué au dispositif d'automatisation,
la station d'automatisation est rattachée physiquement au dispositif d'automatisation pour la mise en service,
un appareil englobé par la station d'automatisation rattachée est identifié avec l'utilisation des données stockées dans le dispositif de configuration par le dispositif d'automatisation à l'aide du nom d'appareil symbolique,
et la station d'automatisation est identifiée à l'aide de la prescription d'attribution stockée sous le nom symbolique.

3. Procédé selon la revendication 2, dans lequel une prescription d'attribution logique à la station d'automatisation et à un groupe d'autres appareils sélectionnés, englobés par cette station d'automatisation, est mémorisée avant la mise en service de la station d'automatisation dans le dispositif de configuration pouvant être attribué au dispositif d'automatisation pour chaque nom symbolique, une identification du groupe d'autres appareils sélectionnés, englobés par cette station d'automatisation, étant effectuée en même temps par l'identification d'un appareil.

4. Procédé selon l'une des revendications précédentes, **caractérisé en ce que** les appareils déclenchent automatiquement une procédure de demande après le rattachement de la station d'automatisation au dispositif d'automatisation et la mise en service de la station d'automatisation n'est réalisée complètement qu'après le passage, par une telle procédure de demande, de tous les appareils englobés par la station d'automatisation.
